# EUROPEAN PATENT SPECIFICATION

(11) **EP 1 969 567 B1**
(45) Date of publication and mention of the grant of the patent: **09.04.2014**
(21) Application number: 06820553.3
(22) Date of filing: 18.12.2006
(51) Int. Cl.: G07D 7/12

(54) **DETECTOR**
DETEKTOR
DETECTEUR

(30) Priority: 16.12.2005 GB 0525664
(43) Date of publication of application: 17.09.2008
(73) Proprietor: Filtrona C & SP Limited, Giltbrook Nottingham NG16 2GT (GB)
(72) Inventor: ALLEN, Philip, John, Nottingham NG16 5JD (GB); GILBERT, Andrew, John, Kent ME14 4LR (GB)
(74) Representative: McCartney, Jonathan William
(86) International application number: PCT/GB2006/004718
(87) International publication number: WO 2007/068952

(56) References cited:
- EP-A- 0 101 115
- WO-A-2005/086099
- WO-A2-95/19019
- DE-A1- 10 316 954
- DE-U1- 20 118 645
- GB-A- 2 309 778

## Description

The present invention relates to a detector for detecting the presence/absence and/or nature of a security mark on an article.

In the field of product or document security it is known to place a machine readable mark on an article or its packaging, which mark can be read by a detector to identify the article and/or to verify the authenticity or otherwise of the article. Such a mark may typically be printed on the article, and may be invisible to the naked eye.

For example, there exist particularly sophisticated, complex inks which reliably emit radiation with certain characteristics under exposure to radiation in a certain frequency range. Such complex inks, which are by their nature difficult for counterfeiters to manufacture include inks known as taggant inks.

A taggant-ink marking on an article will, when exposed to appropriate radiation, exhibit behaviour of a certain signature or characteristic peculiar to that ink. For example, when the ink sample is irradiated by radiation at an "excitation" frequency, the ink sample will emit radiation, at an emission frequency, and will continue to do so after exposure to the excitation radiation has ceased. The emitted radiation, after excitation has ceased, decays in a known, repeatable manner which is unique to the particular taggant.

One example of taggant material, as used in such complex inks, comprises a base material of lattice structure which includes one or more rare-earth metal dopants. By varying the level of dopant, or the position of the dopant molecules within the lattice, it is possible to produce a range of taggant materials which exhibit different, but predictable and repeatable, emission characteristic when excited by a radiation source.

Typically a detector is used to provide the excitation radiation and then to detect emitted radiation to determine the presence/absence, and in certain cases the signature or characteristic, of ink on the article or its packaging.

The detector must therefore incorporate some form of radiation source, the frequency of which must be known, precise and reliably repeatable, and a detection mechanism which is able to detect the presence of emitted radiation of the appropriate frequency.

Such detectors are often used by operatives "in the field" to check consignments of articles in order to identify counterfeit articles.

Detectors used by operatives should advantageously be portable and easy to use.

Known detectors have several problems. Firstly, where emitted radiation to be measured is in the visible part of the spectrum, if the detector is not positioned accurately in relation to the article the ambient light can easily interfere with the detection process, giving inaccurate readings. Secondly, since the taggant ink may be invisible, the operative in the field may have difficulty positioning the article correctly so that the reading can be made.

WO 95/19019 discloses a device for detecting counterfeit banknotes. The device directs ultraviolet light at a sample from a source and measures the level of ultraviolet light reflected from the sample using a first photocell and the amount of fluorescent light generated by the sample using a second photocell. The detected levels are compared with reference levels and only if both reflective and fluorescent criteria are satisfied is the note declared genuine. During testing the sample is swiped over a glass window, preferably under an overlying shield.

DE 103 16 954 discloses electronics for LED ultraviolet banknote testing, illumination and evaluation. The electronics are integrated within a wallet, purse or bag.

The present invention is defined in the attached independent claims to which reference should now be made. Further, preferred features may be found in the sub-claims appended thereto.

According to one aspect of the present invention there is provided a detector for detecting the presence/absence and/or nature of a security mark on an article,
the detector comprising:
emitting means for emitting radiation,
detection means for detecting radiation,
and an article-locating portion for locating an article in use which article-locating portion comprises alignment means for ensuring that an article is aligned with the emitting means and/or the detection means.

The detector comprises a body which has first and second parts movable relative to each other between at least a first, closed configuration, and a second, open configuration wherein in the open configuration the article-locating portion is exposed and the detector is arranged to receive an article to be irradiated.

Preferably, the article-locating portion comprises a mounting surface, against which an article may rest in use, together with the alignment means for ensuring that an article is aligned with the emitting means and/or the detection means.

The article-locating portion may be arranged to locate an article in use on the mounting surface such that a predetermined portion of the article is presented to the emitting means and/or to the detection means.

The emitting means and detection means may be concealed behind one, or more than one, window.

The alignment means may comprise a mark or profile on the mounting surface such that in use the mark or edge provides a reference for the accurate positioning of the article with respect to the emitting means and/or detection means.

The detector may be provided with proximity detection means for detecting the presence and/or absence of an article.

The detector may be provided with a display means arranged in use to display the result of a detection operation. The display means is preferably arranged to provide an indication of the presence/absence and/or nature of a mark detected on an article in use.

The first and second parts of the body are preferably hingedly connected. The first and second parts of the body may hingedly move between the first and second configurations.

At least one movement-stop means may be provided to limit the extent of relative movement of the first and second parts of the case.

A means for retaining the first and second parts in an intermediate open configuration may be provided.

In the closed configuration the body is preferably arranged to protect the emission means and/or detection means and/or the mounting surface.

Preferably the detector is arranged to be hand held in use.

The invention also includes a method of detecting the presence/absence and/or nature of a security mark on an article according to claim 12.

A preferred embodiment of the present invention will now be described, by way of example only, with reference to the accompanying diagrammatic drawings in which:
Figure 1 shows, in perspective view, a detector according to an embodiment of the invention, in a first, closed configuration,
Figure 2 shows the detector in Figure 1 in a second, open configuration,
Figure 3 shows the detector in Figures 1 and 2 in a third, open configuration,
Figure 4 shows a flowchart of the power saving feature, and
Figure 5 is a schematic circuit diagram of the internal components of the detector of Figures 1-3.

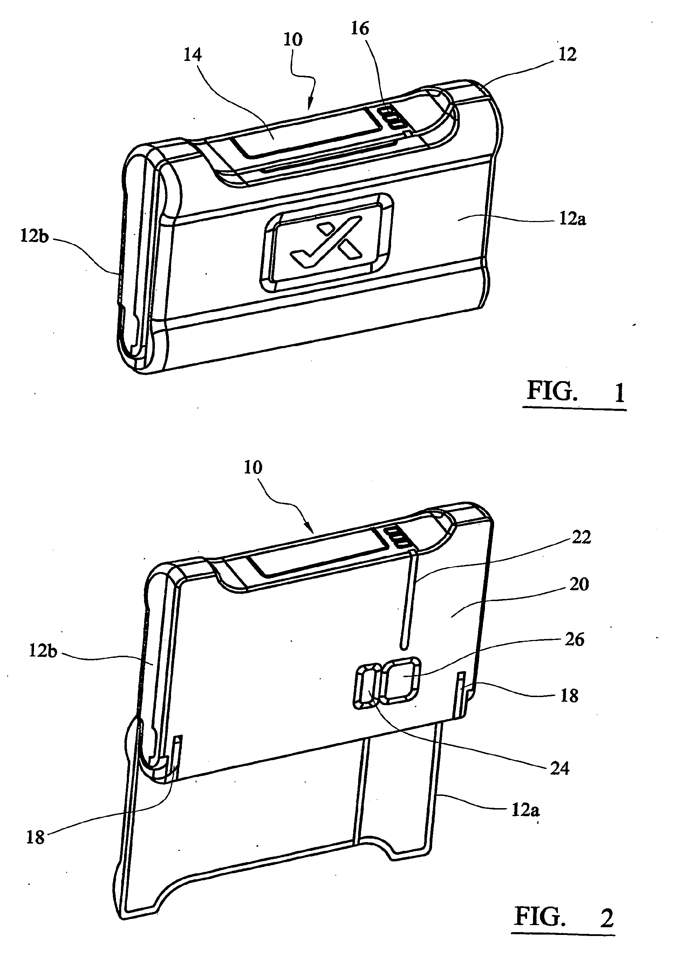

Turning to Figures 1-3 of the drawings, there is shown generally at 10 a hand held electronic detector for detecting the presence/absence and/or nature of a mark on an article (not shown) such as a security mark. The article may comprise a product, such as for example a pack of cigarettes.

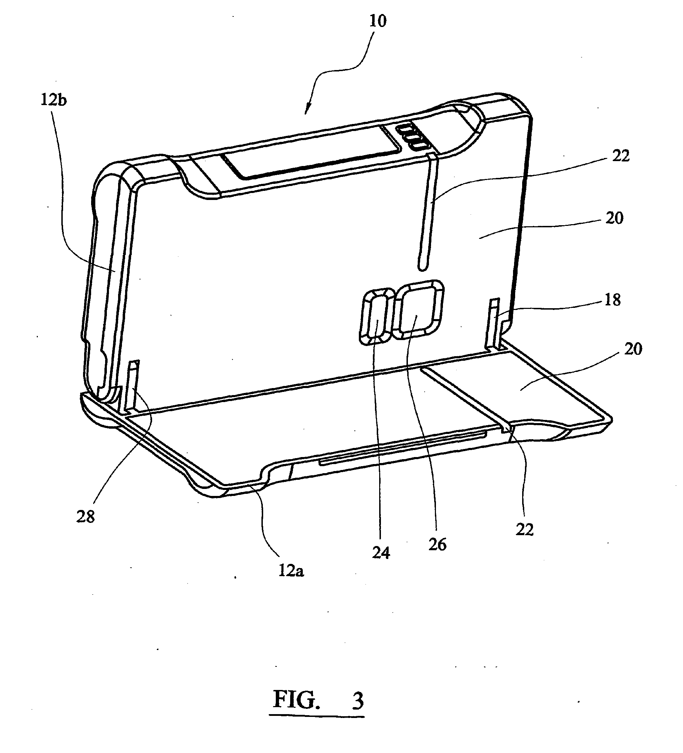

The detector 10 comprises a case or body 12 of strong, rigid plastics material. The case 12 comprises front and rear parts 12a and 12b which are connected together by concealed hinges at their lower edges, so that the parts 12a and 12b can move hingedly between a closed configuration (shown in Figure 1) and a fully open configuration, in which the front and rear parts are angularly spaced by approximately 180°, (shown in Figure 2). There is a further defined intermediate open configuration in which the front and rear parts 12a and 12b are angularly spaced by approximately 90° (shown in Figure 3). When opening the case from the closed position the hinges 18 'lock' when the front and rear parts reach this intermediate position. The hinges will only 'unlock', so that the case can be opened further or closed, if sufficient force is applied. Relative movement of the case parts 12a and 12b to the fully open configuration shown in Figure 2 is limited by hinges 18.

In an open configuration the detector 10 presents an article-locating station comprising a mounting surface 20 for receiving an article, and alignment means 22, located on the mounting surface 20, which in this case is a marked line on the mounting surface 20 with which the security mark should be aligned.

An emission/detection window 26 is provided on the case part 12b through which radiation can be emitted and received. The window 26 is recessed to protect the surface thereof. Further provided on case part 12b is a proximity detector 24 for detecting the presence of an object located on the mounting surface 20. In this case an infrared proximity detector 24 is used.

In the open configuration, the detector 10 is arranged to receive and position an article to be checked, such that a predetermined portion of the article is facing, and accurately aligned with, the emission/detection window 26 and a portion of the article is covering the infrared proximity detector 24.

On an upper edge of the rear case part 12b there is located an electronic display panel 14, comprising an LCD display together with indictor LEDs 16.

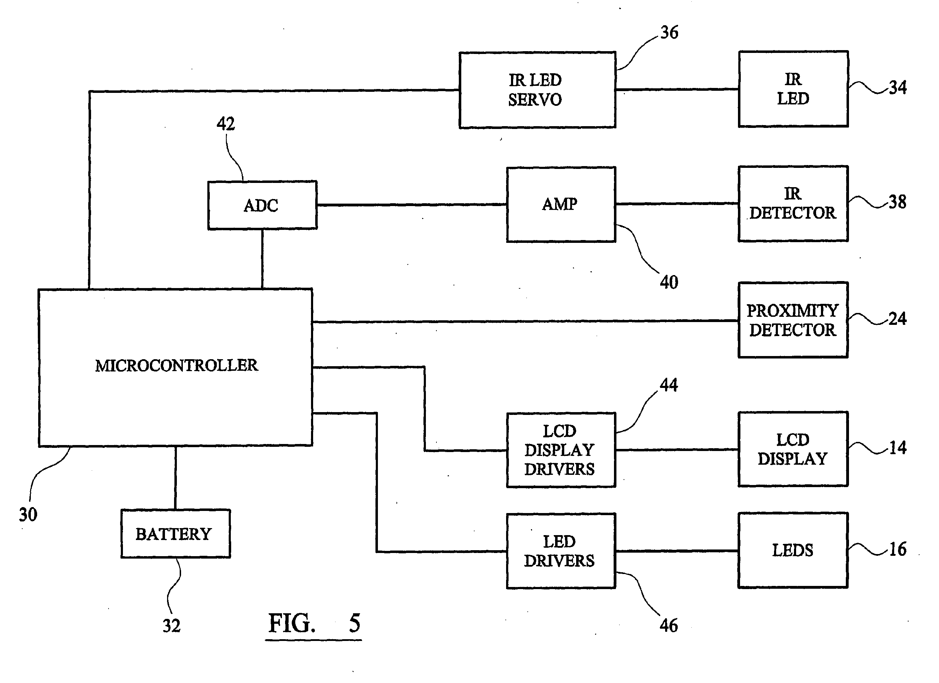

Concealed within case part 12b is electronic circuitry including a programmable controller described below in relation to Figure 5. Movement from the closed to the open or intermediate configurations is advantageously arranged to turn the electronic circuitry within part 12b into an ON state. On turning the circuitry from the OFF state into the ON state an internal check is automatically performed to ensure the circuitry is functioning correctly. If any malfunction or low battery state is detected then this is displayed as a message on the display panel 14.

The electronic controller (not shown) may be programmed for the detection of a specific mark, such as a taggant or other ink exhibiting certain characteristic behaviour under exposure to a certain radiation.

In the detector's ON state a taggant detection operation constantly occurs. The result of this detection operation is displayed on the LCD display 14. As an additional indicator, the plurality of LEDs, which are preferably coloured according to their function, illuminate appropriately in accordance with a state (1) no taggant is detected, a state (2) in which a taggant is detected, but it is not the specific one which had been sought, and a state (3) in which the test is deemed positive in that the specific taggant sought is detected. If the controller is appropriately programmed, the display panel 14 may display information related to the detected taggant.

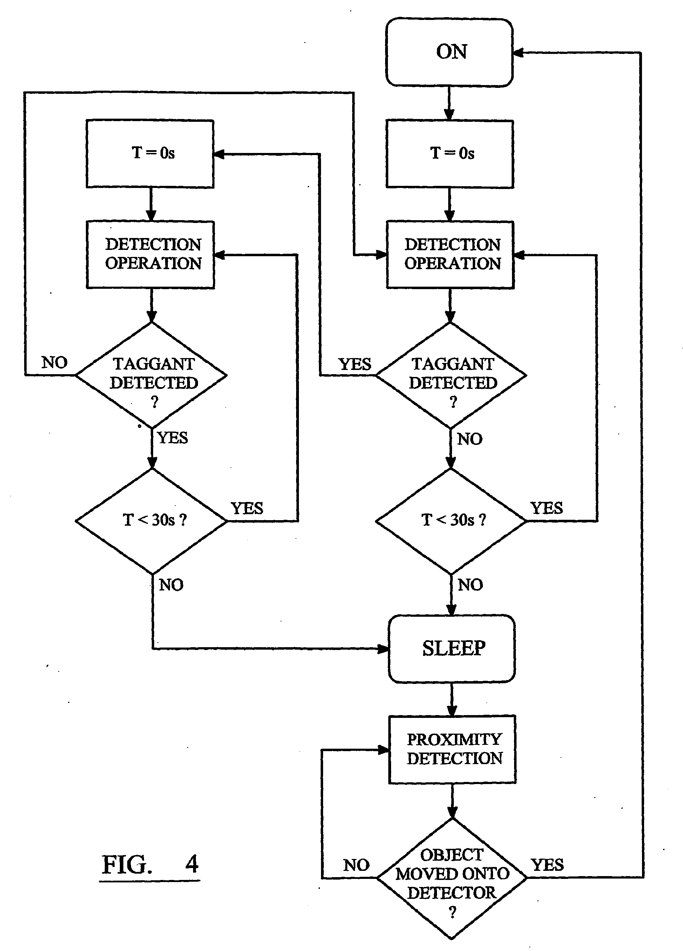

In order to save power a further SLEEP state exists, Figure 4 illustrates this power saving feature. In the SLEEP state the taggant detection operation does not take place and a proximity detector 24 is turned on. The SLEEP state is entered into if within the previous 30 seconds the detector has not gone through the sequence of (a) detecting a taggant, (b) not detecting a taggant and (c) detecting a taggant. This ensures that if a series of taggant marked objects are tested in quick succession then the detector stays on. The ON state is re-entered, from the SLEEP state, when the proximity detector senses an object being placed onto the mounting surface 20.

When not in use, the case parts 12a and 12b can be moved to the closed configuration to protect the windows 24 and 26 and the surface 20. The closure of the device also switches OFF the circuitry in case part 12b. Whereas moulded plastic has been used for the case in this embodiment other suitable materials may be used, such as pressed aluminium.

Figure 5 shows schematically the components within the case 12. A microcontroller 30, deriving power from a battery 32, controls the operation of an infrared LED 34 via LED servo 36. The infrared LED 34 in use irradiates an article (not shown) with infrared radiation. Infrared radiation which is then emitted from the article by virtue of the presence of a taggant substance on the article is detected by infrared detector 38 and its signal is then amplified by amplifier 40 and converted by analogue to digital converter 42 before being fed to the microcontroller 30.

As described above, proximity detector 24 sends an "article present" or "article not present" signal to the microcontroller 30.

The LCD display 14 is driven by an LCD display driver 44 and LEDs 16 are driven by an LED driver 46 under the control of the microcontroller 30, as described above.

In an alternative embodiment (not shown) the device includes a port which can be used for connecting apparatus or instruments to the device in order to perform tests, in order to reprogram the microcontroller 30, or in order to couple the device to a secondary, remote detection apparatus.

In a still further embodiment (not shown) the device can be used to automatically actuate another device, for example to activate apparatus or an instrument, or else to operate a lock, in the event that the device detects the presence of an appropriate taggant material.

## Claims

1. A detector (10) for detecting the presence, absence and/or nature of a security mark on an article,
the detector comprising:
a body (12) which has first and second case parts (12a, 12b) movable relative to each other between at least a first, closed configuration, and a second, open configuration;
emitting means for emitting radiation provided on the second case part (12b);
detection means for detecting radiation provided on the second case part (12b);
electronic circuitry provided within the second case part (12b);
an article-locating portion (20) for locating an article in use which article-locating portion comprises alignment means (22) for ensuring than an article is aligned with the emitting means and/or the detection means; and
wherein in the open configuration the article-locating portion (20) is exposed and the detector is arranged to receive an article to be irradiated; and
wherein moving the case parts (12a, 12b) to the closed configuration switches off the electronic circuitry within the second case part (12b).

2. A detector according to Claim 1, wherein the article-locating portion (20) comprises a mounting surface, against which an article may rest in use, together with alignment means for ensuring that an article is aligned with the emitting means and/or the detection means.

3. A detector according to Claim 2, wherein the article-locating portion (20) is arranged to locate an article in use on the mounting surface such that a predetermined portion of the article is presented to the emitting means and/or to the detection means.

4. A detector according to any of Claims 1 to 3, wherein the emitting means and detection means are concealed behind at least one window (26).

5. A detector according to Claim 2, wherein the alignment means (22) comprises a mark or profile on the mounting surface such that in use the mark or edge provides a reference for the accurate positioning of the article with respect to the emitting means and/or detection means.

6. A detector according to any of Claims 1 to 5, wherein the body (12) is provided with proximity detection means (24) for detecting the presence and/or absence of an article.

7. A detector according to any of Claims 1 to 6, wherein the body (12) is provided with a display means (14) arranged in use to display the result of a detection operation.

8. A detector according to Claim 7, wherein the display means (14) is arranged to provide an indication of the presence/absence and/or nature of a mark detected on an article in use.

9. A detector according to any of Claims 1-8, wherein the first and second case parts (12a, 12b) of the body (12) are hingedly connected and hingedly move between the first and second configurations.

10. A detector according to any of claims 1-9, wherein at least one movement-stop means is provided to limit the extent of relative movement of the first and second case parts (12a, 12b) of the body.

11. A detector according to any of Claims 1-10, wherein means for retaining the first and second case parts (12a, 12b) in an intermediate open configuration are provided.

12. A method of detecting the presence, absence and/or nature of a security mark on an article using a detector comprising: a body (12) which has first and second case parts (12a, 12b) movable relative to each other between at least a first, closed configuration, and a second, open configuration; emitting means for emitting radiation provided on the second case part (12b); detection means for detecting radiation provided on the second case part (12b); and electronic circuitry provided within the second case part (12b);, the method comprising:
moving the first and second case parts (12a, 12b) from a closed configuration to an open configuration to expose an article-locating portion comprising alignment means;
placing an article adjacent to the article-locating portion (20);
aligning the article using the alignment means (22);
automatically initiating an emission/detection operation;
displaying the result of the operation on display means (14) to establish the presence, absence and/or nature of a security mark on the article; and
moving the case parts (12a, 12b) to the closed configuration causing the electronic circuitry within the second case part (12b) to be switched off.

## Patentansprüche

1. Detektor (10) zum Ermitteln des Vorliegens, des Fehlens und/oder der Art einer Sicherheitsmarkierung auf einem Artikel,
wobei der Detektor umfasst:
einen Körper (12) mit einem ersten und zweiten Gehäuseteil (12a, 12b), die relativ zueinander beweglich sind zwischen einer ersten geschlossenen und einer zweiten offenen Stellung,
eine Emittiereinrichtung zum Emittieren von Strahlung, bereitgestellt an dem zweiten Gehäuseteil (12b),
eine Ermittlungseinrichtung zum Ermitteln von Strahlung, bereitgestellt an dem zweiten Gehäuseteil (12b),
einen elektronischen Schaltkreis innerhalb des zweiten Gehäuseteils (12b),
einen Artikelplatzierungsabschnitt (20) zum Platzieren eines in Gebrauch befindlichen Artikels, wobei der Artikelplatzierungsabschnitt eine Ausrichtungseinrichtung (22) umfasst, die gewährleistet, dass ein Artikel mit der Emittiereinrichtung und/oder der Ermittlungseinrichtung ausgerichtet ist, und
wobei in der offenen Stellung der Artikelplatzierungsabschnitt (20) freiliegend ist und der Detektor derart ausgelegt ist, dass er einen zu bestrahlenden Artikel aufnehmen kann, und
wobei das Bewegen der Gehäuseteile (12a, 12b) in die geschlossene Stellung den elektronischen Schaltkreis innerhalb des zweiten Gehäuseteils (12b) abschaltet.

2. Detektor nach Anspruch 1, wobei der Artikelplatzierungsabschnitt (20) eine Anlagefläche umfasst, an der ein in Gebrauch befindlicher Artikel anliegen kann, zusammen mit einer Ausrichtungseinrichtung, die gewährleistet, dass ein Artikel mit der Emittiereinrichtung und/oder der Ermittlungseinrichtung ausgerichtet ist.

3. Detektor nach Anspruch 2, wobei der Artikelplatzierungsabschnitt (20) dafür ausgelegt ist, einen in Gebrauch befindlichen Artikel an der Anlagefläche derart zu platzieren, dass ein bestimmter Abschnitt des Artikels der Emittiereinrichtung und/oder der Ermittlungseinrichtung dargeboten wird.

4. Detektor nach einem der Ansprüche 1 bis 3, wobei die Emittiereinrichtung und die Ermittlungseinrichtung hinter mindestens einem Fenster (26) verborgen sind.

5. Detektor nach Anspruch 2, wobei die Ausrichtungseinrichtung (22) eine Markierung oder ein Profil auf der Anlagefläche umfasst, so dass in Gebrauch die Markierung oder Kante einen Bezugspunkt für das akkurate Positionieren des Artikels in Bezug auf die Emittiereinrichtung und/oder die Ermittlungseinrichtung bietet.

6. Detektor nach einem der Ansprüche 1 bis 5, wobei der Körper (12) mit einer Näherungskennungseinrichtung (24) ausgestattet ist zum Ermitteln, ob ein Artikel vorliegt oder fehlt.

7. Detektor nach einem der Ansprüche 1 bis 6, wobei der Körper (12) mit einer Anzeigeeinrichtung (14) ausgestattet ist, die das Ergebnis des Ermittlungsschritts anzeigt.

8. Detektor nach Anspruch 7, wobei die Anzeigeeinrichtung (14) derart ausgelegt ist, dass sie eine Meldung über das Vorliegen/Fehlen und/oder die Art einer auf dem in Gebrauch befindlichen Artikel ermittelten Markierung ausgibt.

9. Detektor nach einem der Ansprüche 1-8, wobei der erste und zweite Gehäuseteil (12a, 12b) des Körpers (12) mit einem Scharnier verbunden sind und sich aufklappbar zwischen der ersten und der zweiten Stellung bewegen.

10. Detektor nach einem der Ansprüche 1-9, wobei mindestens eine Bewegungsstoppeinrichtung bereitgestellt wird, so dass das Ausmaß einer relativen Bewegung zwischen dem ersten und zweiten Gehäuseteil (12a, 12b) des Körpers begrenzt wird.

11. Detektor nach einem der Ansprüche 1-10, wobei eine Einrichtung zum Halten des ersten und zweiten Gehäuseteils (12a, 12b) in einer Zwischenstellung bereitgestellt sind.

12. Verfahren zum Ermitteln des Vorliegens, des Fehlens und/oder der Art einer Sicherheitsmarkierung auf einem Artikel unter Verwendung eines Detektors, der Folgendes umfasst: einen Körper (12) mit einem ersten und zweiten Gehäuseteil (12a, 12b), die relativ zueinander beweglich sind zwischen einer ersten geschlossenen und einer zweiten offenen Stellung, eine an dem zweiten Gehäuseteil (12b) bereitgestellte Emittiereinrichtung zum Emittieren von Strahlung, eine an dem zweiten Gehäuseteil (12b) bereitgestellte Ermittlungseinrichtung zum Ermitteln von Strahlung und einen elektronischen Schaltkreis innerhalb des zweiten Gehäuseteils (12b), wobei man bei dem Verfahren:
den ersten und zweiten Gehäuseteil (12a, 12b) von einer geschlossenen in eine offene Stellung bewegt und einen Artikelplatzierungsabschnitt freilegt, der eine Ausrichtungseinrichtung umfasst,
einen Artikel in die Nähe des Artikelplatzierungsabschnitts (20) bringt,
den Artikel unter Verwendung der Ausrichtungseinrichtung (22) ausrichtet,
automatisch einen Emissions- und Ermittlungsschritt einleitet,
das Ergebnis des Schritts auf einer Anzeigeeinrichtung (14) anzeigt, so dass das Vorliegen, Fehlen und/oder die Art einer Sicherheitsmarkierung auf dem Artikel festgestellt werden kann, und
die Gehäuseteile (12a, 12b) in die geschlossene Stellung bewegt, so dass der elektronische Schaltkreis innerhalb des zweiten Gehäuseteils (12b) abgeschaltet wird.

## Revendications

1. Détecteur (10) pour détecter la présence, l'absence et/ou la nature d'une marque de sécurité sur un article, le détecteur comprenant :
un corps (12) qui comporte des première et deuxième parties de boîtier (12a, 12b) pouvant être déplacées l'une par rapport à l'autre entre au moins une première configuration fermée et une deuxième configuration ouverte ;
des moyens d'émission pour émettre un rayonnement prévus sur la deuxième partie de boîtier (12b) ;
des moyens de détection pour détecter un rayonnement prévus sur la deuxième partie de boîtier (12b) ;
des éléments de circuit électroniques prévus dans la deuxième partie de boîtier (12b) ;
une partie de positionnement d'article (20) pour positionner un article en utilisation, laquelle partie de positionnement d'article comprend des moyens d'alignement (22) pour garantir qu'un article est aligné avec les moyens d'émission et/ou les moyens de détection ; et
dans lequel, dans la configuration ouverte, la partie de positionnement d'article (20) est exposée et le détecteur est agencé pour recevoir un article devant être irradié ; et
dans lequel le déplacement des parties de boîtier (12a, 12b) dans la configuration fermée désactive les éléments de circuit électroniques dans la deuxième partie de boîtier (12b).

2. Détecteur selon la revendication 1, dans lequel la partie de positionnement d'article (20) comprend une surface de montage, contre laquelle un article peut reposer en utilisation, avec des moyens d'alignement pour garantir qu'un article est aligné avec les moyens d'émission et/ou les moyens de détection.

3. Détecteur selon la revendication 2, dans lequel la partie de positionnement d'article (20) est agencée pour positionner un article en utilisation sur la surface de montage de sorte qu'une partie prédéterminée de l'article soit présentée aux moyens d'émission et/ou aux moyens de détection.

4. Détecteur selon l'une quelconque des revendications 1 à 3, dans lequel les moyens d'émission et les moyens de détection sont dissimulés derrière au moins une fenêtre (26).

5. Détecteur selon la revendication 2, dans lequel les moyens d'alignement (22) comprennent une marque ou un profil sur la surface de montage de sorte qu'en utilisation la marque ou le bord fournisse une référence pour le positionnement précis de l'article par rapport aux moyens d'émission et/ou aux moyens de détection.

6. Détecteur selon l'une quelconque des revendications 1 à 5, dans lequel le corps (12) est pourvu de moyens de détection de proximité (24) pour détecter la présence et/ou l'absence d'un article.

7. Détecteur selon l'une quelconque des revendications 1 à 6, dans lequel le corps (12) est pourvu de moyens d'affichage (14) agencés en utilisation pour afficher le résultat d'une opération de détection.

8. Détecteur selon la revendication 7, dans lequel les moyens d'affichage (14) sont agencés pour fournir une indication de la présence/l'absence et/ou la nature d'une marque détectée sur un article en utilisation.

9. Détecteur selon l'une quelconque des revendications 1 à 8, dans lequel les première et deuxième parties de boîtier (12a, 12b) du corps (12) sont reliées d'une manière articulée et se déplacent d'une manière articulée entre les première et deuxième configurations.

10. Détecteur selon l'une quelconque des revendications 1 à 9, dans lequel au moins un moyen d'arrêt de mouvement est prévu pour limiter l'étendue du mouvement relatif des première et deuxième parties de boîtier (12a, 12b) du corps.

11. Détecteur selon l'une quelconque des revendications 1 à 10, dans lequel des moyens pour retenir les première et deuxième parties de boîtier (12a, 12b) dans une configuration ouverte intermédiaire sont prévus.

12. Procédé de détection de la présence, de l'absence et/ou de la nature d'une marque de sécurité sur un article en utilisant un détecteur comprenant : un corps (12) qui comporte des première et deuxième parties de boîtier (12a, 12b) pouvant être déplacées l'une par rapport à l'autre entre au moins une première configuration fermée et une deuxième configuration ouverte ; des moyens d'émission pour émettre un rayonnement prévus sur la deuxième partie de boîtier (12b) ; des moyens de détection pour détecter un rayonnement prévus sur la deuxième partie de boîtier (12b) ; et des éléments de circuit électroniques prévus dans la deuxième partie de boîtier (12b) ; le procédé comprenant :
le déplacement des première et deuxième parties de boîtier (12a, 12b) d'une configuration fermée dans une configuration ouverte pour exposer une partie de positionnement d'article comprenant des moyens d'alignement ;
le placement d'un article adjacent à la partie de positionnement d'article (20) ;
l'alignement de l'article en utilisant les moyens d'alignement (22) ;
le lancement automatique d'une opération d'émission/de détection ;
l'affichage du résultat de l'opération sur des moyens d'affichage (14) pour établir la présence, l'absence et/ou la nature d'une marque de sécurité sur l'article ; et
le déplacement des parties de boîtier (12a, 12b) dans la configuration fermée, provoquant la désactivation des éléments de circuit électroniques dans la deuxième partie de boîtier (12b).
